(19) **Europäisches Patentamt / European Patent Office / Office européen des brevets**

(11) **EP 1 751 518 B1**

(12) **FASCICULE DE BREVET EUROPEEN**

(45) Date de publication et mention de la délivrance du brevet:
**06.01.2010 Bulletin 2010/01**

(21) Numéro de dépôt: **05773041.8**

(22) Date de dépôt: **17.05.2005**

(51) Int Cl.:
*G01N 15/02* (2006.01)    *G01N 21/53* (2006.01)

(86) Numéro de dépôt international:
**PCT/FR2005/001231**

(87) Numéro de publication internationale:
**WO 2005/124312 (29.12.2005 Gazette 2005/52)**

(54) **PROCEDE DE DETECTION DU SEUIL DE FLOCULATION D'UN MILIEU COLLOIDAL**

VERFAHREN ZUR DETEKTION DER FLOCKUNGSSCHWELLE EINES KOLLOIDALEN MEDIUMS

METHOD FOR FOR DETECTING THE FLOCCULATION THRESHOLD OF A COLLOIDAL MEDIUM

(84) Etats contractants désignés:
**AT BE BG CH CY CZ DE DK EE ES FI FR GB GR HU IE IS IT LI LT LU MC NL PL PT RO SE SI SK TR**

(30) Priorité: **18.05.2004 FR 0405406**

(43) Date de publication de la demande:
**14.02.2007 Bulletin 2007/07**

(73) Titulaire: **TOTAL RAFFINAGE MARKETING**
**92800 Puteaux (FR)**

(72) Inventeurs:
• **REMINIAC, Myriam**
  **F-76620 Le Havre (FR)**
• **SIMONET, Coralie**
  **F76600 Le Havre (FR)**
• **DIOT, André**
  **CH-2114 Fleurier (CH)**

(74) Mandataire: **Hirsch & Associés**
**58, avenue Marceau**
**75008 Paris (FR)**

(56) Documents cités:
EP-A- 0 582 320        WO-A1-2005/040482
DE-A- 10 149 879       US-A- 4 040 743
US-A- 4 628 204        US-A- 5 973 779
US-A1- 2004 011 965    US-B1- 6 469 787

• HIRAI MITSUHIRO ET AL: J. PHYS. CHEM. B, [Online] vol. 103, no. 44, 10 juin 1999 (1999-06-10), - 14 octobre 1999 (1999-10-14) pages 9658-9662, Extrait de l'Internet: URL:http://pubs.acs.org> [extrait le 2009-02-13]

**Description**

DOMAINE TECHNIQUE

L'invention a pour objet un nouveau procédé de détection de la floculation des asphalténes, en utilisant un dispositif de détection associé pour la mesure de la lumière dans des produits hydrocarbonés lourds, les huiles usées, les eaux sales ou tout produit contenant une émulsion et, notamment, pour la mesure du seuil de floculation d'un milieu colloïdal.

ETAT DE LA TECHNIQUE

Les produits pétroliers, et notamment les fiouls ou les résidus de distillation du pétrole, généralement appelés "Produits noirs" dans la profession, sont des systèmes colloïdaux constitués d'asphaltènes - c'est à dire de molécules lourdes très aromatiques possédant des chaînes latérales paraffiniques - qui sont dispersés (ou encore appelés "peptisés") sous forme de micelles dans une phase huileuse. Ces systèmes colloïdaux peuvent être déstabilisés plus ou moins facilement, par exemple par craquage thermique ou par dilution. Ainsi, dans une raffinerie, le procédé de conversion, appelé viscoréduction, peut conduire à une précipitation des asphaltènes sous l'effet des températures élevées du procédé (généralement supérieures à 400°C). De même, la constitution de mélanges contenant de tels systèmes colloïdaux peut générer une précipitation de ces asphaltènes par floculation, en particulier si l'environnement de dilution est du type paraffinique.

Il est donc nécessaire de connaître ou d'estimer les caractéristiques de ces asphaltènes dans les produits noirs, tel un produit pétrolier ou un mélange de produits hydrocarbonés, afin d'évaluer sa stabilité intrinsèque, ainsi que sa réserve de stabilité associée. En effet, plus la réserve de stabilité sera élevée, moins le produit noir sera sujet à des problèmes de précipitation des asphaltènes, ou de compatibilité par dilution avec d'autres espèces chimiques, notamment des bases paraffiniques.

On notera que les fiouls ou résidus de pétrole sont constitués d'une matrice malténique (résines + paraffines) et d'asphaltènes dispersés sous forme colloïdale. Les asphaltènes qui ont un caractère très aromatique (molécules polaires) sont insolubles avec les paraffines (molécules apolaires). Pour qu'un résidu soit stable, il est nécessaire que les asphaltènes soient maintenus en suspension (ou dispersés ou peptisés) dans la matrice huileuse. La peptisation des asphaltènes est assurée par les résines qui ont à la fois un caractère aromatique et un caractère apolaire. Lorsqu'un résidu a été déstabilisé, les asphaltènes floculent en s'agglomérant sous forme de grosses particules pouvant générer des bouchages de filtres présents dans les différentes unités de traitement, ou encore des détériorations de la métallurgie, par exemple les tuyauteries.

La caractéristique appelée valeur P, ou encore stabilité intrinsèque, par exemple d'un produit noir, est définie dans la profession par l'expression suivante:

P=aromaticité des maltènes/aromaticité des asphaltènes, soit encore P=Po/(1-Pa), dans laquelle,

- Po représente le pouvoir du milieu à solubiliser les asphaltènes, c'est à dire le caractère aromatique du milieu. Plus celui-ci sera aromatique, plus le Po sera élevé.
- Pa est le caractère aromatique des asphaltènes.
- 1-Pa représente l'aromaticité du milieu nécessaire pour solubiliser les asphaltènes présents.

Si P>1, les asphaltènes sont peptisés et sont donc stables. P-1 représente la réserve de stabilité (plus cette réserve sera élevée, moins le produit noir sera sujet à des problèmes de précipitation ou de compatibilité).

La sévérité d'un choc thermique, tel que celui apporté par une distillation ou une viscoréduction agit directement sur l'aromaticité des asphaltènes puisque le craquage thermique provoque la coupure des chaînes alkylées et la condensation des asphaltènes. Les asphaltènes plus condensés et moins ramifiés (Pa plus faibles) vont avoir besoin d'un solvant plus puissant pour rester dispersés. Ainsi, la connaissance de la valeur de P, reliée à celle du Pa, va permettre de préciser les réglages des conditions de marche de l'unité concernée pour que celle-ci soit opérée sans risque de précipitation des asphaltènes, et par conséquent, pour répondre aux différentes exigences en matière de qualité de l'exploitant.

Par ailleurs, la connaissance des valeurs du pouvoir solvant Po et du caractère aromatique des asphaltènes Pa est nécessaire pour optimiser le mélange des différents constituants des fiouls. C'est ainsi que, si on ajoute un fluxant (produit capable d'abaisser la viscosité d'un mélange) de pouvoir solvant faible à un produit noir, par exemple viscoréduit, et présentant des valeurs Po élevée et Pa faible, on réduit la valeur du Po du mélange, ce qui peut conduire à une déstabilisation du produit noir, et par conséquent à une floculation des asphaltènes, car les valeurs Po et Pa résultantes seraient trop faibles pour satisfaire la relation P>1, c'est à dire la condition pour que les dites asphaltènes soient peptisées, donc stables.

De façon habituelle, on détermine au laboratoire les valeurs de P et Pa, puis par calcul Po, d'un produit noir par une dilution étagée à l'aide d'un solvant paraffinique dudit produit noir, préalablement mélangé à un solvant aromatique. On note le moment où une floculation intervient. La mesure est répétée pour au moins un autre mélange avec un taux de dilution différent. On obtient ainsi des résultats qui permettent par corrélation linéaire d'obtenir les valeurs recherchées de P et Pa, puis d'en déduire par calcul Po.

Expérimentalement, le seuil de floculation dans un mélange donné peut être décelé par l'intermédiaire de plusieurs sondes optiques fonctionnant dans l'infra-rouge (IR) ou le proche infra-rouge (NIR).

Par exemple, la technique décrite dans les brevets FR-A-2 596 522 ou US-A-4 628 204, de la société Texaco Belgium SA, permet de mesurer par IR le seuil de floculation d'une solution colloïdale pendant sa dilution. Cette mesure nécessite au préalable le bon choix de la sonde optique de mesure (il y a plusieurs sondes) en fonction de la nature et notamment de la présence des asphaltènes plus ou moins importante dans le produit noir à tester. En cas de mauvais choix de l'opérateur, il est alors nécessaire de procéder au nettoyage de l'appareillage, puis à une nouvelle préparation de l'échantillon pour une nouvelle mesure avec une autre sonde, ce qui induit une perte de temps pouvant être supérieure à une heure de temps opérateur, alors que le temps d'une analyse est d'environ 1H30 à 2H00, notamment si c'est le choix d'une sonde différente qui s'avère judicieux.

Une sonde, telle que décrite dans US-A-4 628 204, comprend une DEL infrarouge reçue dans un boîtier cylindrique et qui émet, à travers une lentille, un rayonnement infrarouge. Ce rayonnement infrarouge traverse l'échantillon à tester au niveau d'une fente dans la sonde. Le rayonnement infrarouge traverse ensuite une lentille, avant d'être reçu par un phototransistor, reçu dans un boîtier cylindrique.

Un autre exemple est la méthode développé par la société Shell, en collaboration avec son partenaire néerlandais Zematra, fabricant d'appareils d'analyses. Cette méthode, dans laquelle la détection du seuil de floculation du milieu colloïdal s'effectue à l'aide d'une seule sonde, constituée d'une simple fibre optique entourée de verre, n'est malheureusement pas utilisable pour toute la gamme des produits noirs. En effet, le chauffage systématique de l'échantillon à 150°C, outre les problèmes de sécurité, peut provoquer, pour certains types de produits noirs, des dégradations préjudiciables à la mesure du seuil de floculation. Le temps d'une analyse, quant à lui, est relativement long puisque pouvant être supérieur à 5 heures.

Une autre méthode est également proposée pour mesurer la valeur de P sur les produits noirs avec un appareil "Porla", fabriqué par la société finlandaise FMS (Finnish Measurement Systems Ltd), et commercialisé par la société anglaise Med-Lab. Cet appareil utilise une cellule de mesure à circulation continue de l'échantillon à analyser avec une détection optique du seuil de floculation au moyen d'un prisme fonctionnant en réflexion totale. La gamme de mesure est très large et un résultat est toujours accessible, même avec des produits noirs dont le seuil de floculation est réputé difficile à mesurer. Toutefois, ces résultats sont obtenus après modifications des paramètres opératoires de la méthode, qui deviennent alors une fonction de la nature du produit, ce qui est inacceptable quand la gamme des produits à analyser est très variable, comme dans l'industrie du pétrole.

Les méthodes aujourd'hui proposées pour la mesure du seuil de floculation des asphaltènes dans des produits hydrocarbonés, présentent donc un certain nombre d'inconvénients. Elles n'offrent pas nécessairement la simplicité, la rapidité et la précision requises des résultats, notamment pour un pilotage en continu d'une unité de traitement, par exemple de viscoréduction et/ou d'une unité de mélanges efficace. Elles ne permettent pas, non plus, l'analyse directe d'une large gamme de produits selon leur teneur en asphaltènes. Elles utilisent des techniques qui ne sont pas facilement automatisables et/ou qui ne sont pas d'une grande simplicité d'utilisation.

La présente invention vise à remédier à un ou plusieurs des inconvénients mentionnés ci-dessus. RESUME DE L'INVENTION

L'invention a pour objet un procédé de mesure selon la revendication 1.

Selon un mode de réalisation, la lumière est constituée de longueurs d'ondes appartenant au domaine spectral du proche infra-rouge ou de l'infra rouge.

La surface réfléchissante de renvoi est constituée d'un miroir.

Selon un mode de réalisation, le procédé est adapté pour la mesure du seuil de floculation d'un milieu colloïdal et comprend l'utilisation d'au moins deux sondes fonctionnant en transmission indirecte par réflexion.

Selon un mode de réalisation, le dispositif comprend en outre une sonde fonctionnant en transmission directe.

Selon un mode de réalisation, chacune desdites au moins deux sondes comprend un émetteur relié à un premier guide d'ondes émettant au niveau d'une zone de détection du milieu, des miroirs de renvoi en aval de ladite zone de détection au niveau de fenêtre d'entrée et un second guide d'ondes relié à un récepteur.

Selon un mode de réalisation, les miroirs de renvoi opèrent à 180°.

Selon un mode de réalisation, les miroirs de renvoi et le second guide d'ondes sont intégrés en une seule pièce.

Selon un mode de réalisation, le dispositif comprend deux sondes et les seconds guides d'ondes sont confondus.

Selon un mode de réalisation, les premier et second guides d'ondes sont en verre.

Par ailleurs, il est connu de EP-A-0 582 320 une sonde de détection de lumière comprenant une source lumineuse reliée à une première fibre optique ainsi qu'un détecteur de lumière relié à une deuxième fibre optique, les première et deuxième fibres optiques étant placées l'une en face de l'autre et distantes l'une de l'autre de manière à former un canal de mesure quand la sonde est plongée dans un liquide.

Il est également connu de DE-A-101 49 879 un dispositif de spectrophotométrie comprenant une source de lumière et un détecteur de lumière reliés par un guide d'onde. Le guide d'onde présente un évidement en forme de cuvette pour recevoir le milieu liquide à analyser.

Selon un mode de réalisation, le dispositif comprend deux sondes fonctionnant en transmission indirecte par réflexion, ces sondes opérant au niveau de zones de détection du milieu de dimensions distinctes.

Selon un mode de réalisation, le dispositif comprend une sonde fonctionnant en transmission indirecte par réflexion, cette sonde opérant au niveau d'une zone de détection du milieu dont la dimension est variable.

Selon un mode de réalisation, le dispositif comprend d'un côté une première sonde en transmission directe opérant au niveau d'une première zone de détection du milieu; et de l'autre côté deux sondes opérant au niveau de zones de détection du milieu de dimensions distinctes, ces trois zones ayant des dimensions croissantes, la première zone de détection de la sonde opérant en transmission directe étant de dimension la plus faible.

L'invention a aussi pour objet un procédé de mesure du seuil de floculation d'un milieu colloïdal par addition étagée de solvant apolaire utilisant le dispositif selon l'invention, comprenant l'étape de détermination, à l'aide des sondes dudit dispositif, de la floculation après addition de la quantité de solvant apolaire nécessaire à la floculation.

Selon un mode de réalisation, le procédé comprend les étapes suivantes: (i) on introduit dans le milieu au moins deux sondes opérant au niveau de zones de détection de dimensions distinctes, lesdites au moins deux sondes étant comprises dans le dispositif selon l'invention; (ii) on détermine celle des deux sondes qui est appropriée à la mesure par détermination du seuil de transmission du milieu avant addition de solvant apolaire; et (iii) on détermine à l'aide de la sonde ainsi désignée la floculation après addition de la quantité de solvant apolaire nécessaire à la floculation.

Selon un mode de réalisation, les sondes sont des sondes émettant dans le domaine du NIR et on détermine l'occurrence de la floculation par détermination du pic d'absorption.

Selon un mode de réalisation, lesdites au moins deux sondes sont comprises dans le dispositif ci-dessus.

Selon un mode de réalisation, la sonde de mesure est choisie automatiquement parmi les au moins deux sondes.

Selon un mode de réalisation, le procédé est mis en oeuvre à température ambiante.

Selon un mode de réalisation, le milieu comprend des asphaltènes. Selon un mode de réalisation, l'invention a encore pour objet un procédé de détermination de la stabilité d'un mélange comprenant des asphaltènes par mise en oeuvre successive au moins deux fois du procédé selon l'invention ci-dessus sur un milieu contenant le mélange et une quantité donnée de solvant aromatique, à des taux de dilution différents.

Selon un mode de réalisation, le couple solvant aromatique/solvant paraffinique utilisé est le couple toluène/n-heptane.

BREVE DESCRIPTION DES FIGURES

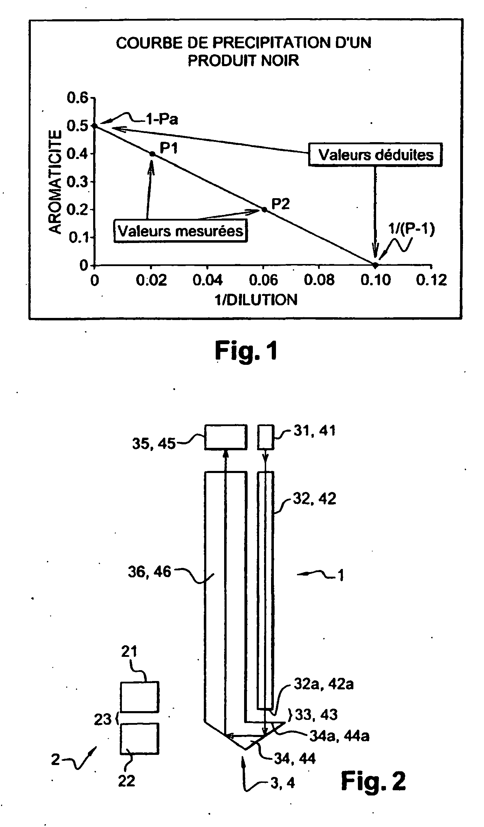

- La figure 1 est une représentation du graphe aromaticité du solvant en fonction de l'inverse de la dilution, c'est à dire la courbe de précipitation d'un produit noir qui, à un taux de dilution déterminé de ce même produit noir, associe l'aromaticité minimale du solvant nécessaire pour que le mélange ne précipite pas.
- La figure 2 est une représentation schématique d'un dispositif comprenant d'une part une sonde fonctionnant en transmission directe, et d'autre part, au moins deux sonde fonctionnant en transmission indirecte par réflection, ce dispositif étant utilisé dans le procédé selon un mode de réalisation.

EXPOSE DETAILLEE DES MODES DE REALISATION DE L'INVENTION

En référence à la figure 1, on décrit la méthode utilisant les sondes classiques proposées par la société Texaco Belgium SA pour la détermination des valeurs de P, Po et Pa, pour un mélange donné de produit noir.

La stabilité intrinsèque de tout système colloïdal est quantifiée par une dilution à l'aide d'un solvant paraffinique d'un produit noir, tel qu'un fioul, un résidu de distillation atmosphérique du pétrole (ou sous vide), un pétrole brut, préalablement mélangé avec un solvant aromatique. Cette stabilité intrinsèque (P) dépend du caractère aromatique des asphaltènes (Pa) et du caractère aromatique du milieu (Po), comme il a été décrit plus haut. On détermine ainsi la stabilité intrinsèque P d'un système colloïdal par mesure du seuil de floculation d'au moins 2 mélanges différents. A partir d'au moins ces 2 points, on trace une droite, dite de précipitation d'un produit noir (fig 1), qui permet d'accéder aux paramètres Pa et P, puis par calcul, à la valeur Po.

Par ajout d'un solvant paraffinique dans le produit noir, le mélange devient instable à partir d'un certain taux de dilution appelé "taux de dilution minimal".

On utilise les définitions suivantes:

- Taux de dilution (ml/g):

  volume de solvant total (aromatique + paraffinique) en millilitres/masse de produit noir en en grammes.

- stabilité intrinsèque P du produit noir:

  P = 1 + Taux de dilution minimal. On retrouve ici la notion de P-1 comme réserve de stabilité.

Pour les mesures expérimentales, on utilise deux types de solvants, le premier est binaire, constitué essentiellement de molécules aromatiques pour la dilution de l'échantillon (par exemple toluène, xylène, ou encore 1-méthylnaphtalène) et le second est apolaire de type solvant paraffinique (par exemple n-heptane, cétane, ou encore iso-octane) pour provoquer la floculation des asphaltènes.

L'aromaticité du solvant binaire est définie comme suit :

  volume de solvant aromatique/volume de solvant total. La valeur 1-Pa est égale à l'aromaticité limite du solvant binaire permettant de maintenir le mélange stable.

Pour les fortes aromaticités du solvant, le mélange reste stable. Pour les faibles aromaticités du solvant, le mélange devient instable. Il existe donc une aromaticité limite du solvant permettant de maintenir la stabilité du mélange.

Le caractère aromatique des asphaltènes est défini par : Pa=1 - aromaticité limite

On appelle courbe de précipitation la fonction qui, à un taux de dilution donné du produit noir, associe l'aromaticité minimale du solvant pour que le mélange ne précipite pas. L'équation de la courbe de précipitation est donnée par la formule:

  Aromaticité du solvant en fonction du taux de dilution, soit ici :

$$1\text{-Pa}=f(1/\text{taux dilution})=A + B/\text{taux de dilution}.$$

A et B sont des constantes qui dépendent uniquement de l'échantillon et permettent d'accéder aux valeurs de P, Po et Pa.

On procède comme suit. On part d'un premier mélange d'une masse donnée de produit noir dans une quantité donnée de solvant aromatique et on ajoute par incréments successifs un solvant paraffinique. On détermine le seuil de floculation (notamment par une méthode utilisant une sonde IR) et on note alors le taux de dilution et l'aromaticité associée au mélange analysé. On obtient un premier point, identifié par le point P1 sur le graphe (fig 1). On recommence l'opération, avec un produit de départ qui est initialement moins fortement dilué dans le solvant aromatique. On obtient alors une autre mesure matérialisée par le point P2. Avec les deux points P1 et P2 il est alors possible de tracer la droite passant par ces points et d'obtenir des valeurs limites (1-Pa) sur l'axe des ordonnées (aromaticité limite ou taux de dilution infini) et 1/(P-1) sur l'axe des abscisses (aromaticité nulle). Il devient ensuite possible d'accéder aux valeurs de P, Pa puis Po par le calcul.

Cette technique, qui ne peut pas faire référence à une méthode normalisée car inexistante à ce jour, et qui consiste en la construction d'une courbe de précipitation, à partir d'au moins deux résultats de mesures, pour ensuite déterminer les valeurs des aromaticités limites et nulles, est celle généralement suivie dans l'invention. Les masses, les volumes et les produits utilisés sont tout à fait classiques dans l'art de ce type d'analyse.

En référence à la figure 2, le dispositif (1) comprend d'une part une sonde (2) fonctionnant en transmission directe, et d'autre part, au moins une sonde, de préférence deux sondes (3, 4), fonctionnant en transmission indirecte par réflexion. La sonde (2) comprend un émetteur (21) et un récepteur (22), créant entre eux une zone de détection (23), ici par exemple de 0,5 mm. L'émetteur est un émetteur IR classique, de même que le récepteur. Le diamètre utile de l'émetteur est notamment de 0,6-0,7 mm. Cette sonde (2) est d'un type usuel dans l'art; elle correspond à une sonde classiquement utilisée dans la méthode IR proposée par Texaco Belgium SA. Les sondes (3, 4) sont d'un type nouveau dans l'art. Elles sont basées sur un principe de transmission par réflexion, en utilisant un guide d'ondes. Par exemple la sonde (3) comprend un premier émetteur NIR (31) couplé à un guide d'ondes (32), par exemple un cylindre en verre. Ce cylindre de verre peut avoir un diamètre par exemple de 3 à 5 mm, typiquement environ 4 mm. Ce guide d'onde transmet la lumière au niveau d'une première zone de détection (33) qui se situe entre l'extrémité inférieure (32a) du guide d'ondes (32) et la fenêtre d'entrée (34a) d'un second guide d'onde (36). Deux miroirs de renvoi (34) sont disposés au plus près de cette fenêtre d'entrée et de façon telle qu'ils opèrent un retournement du rayonnement vers le récepteur (35), par le biais du guide d'ondes (36), de préférence en verre. De façon préférée, les miroirs (34) et le guide d'ondes de retour (36) sont formés de façon intégrale, et le système en résultant a une forme générale de J. La partie sensiblement allongée du guide d'ondes (36) est de préférence en forme de demi-lune à des fins de compacité du matériel (la face plane est de préférence recouverte d'isolant noir pour éviter une perturbation par le guide d'onde (32)). Les plans de renvoi des miroirs sont en général en verre et sont recouverts d'un matériau adapté à la fonction miroir. Par exemple, la sonde (4) comprend également un premier émetteur NIR (41) couplé à un guide d'ondes (42), similaire et de préférence identique au guide d'ondes (32) décrit ci-dessus. Ce guide d'onde émet au niveau d'une seconde zone de détection (43) qui se situe entre l'extrémité inférieure (42a) du guide d'ondes (42) et la fenêtre d'entrée (44a) d'un second guide d'ondes (46). Les miroirs de renvoi (44) fonctionnent de la même manière que ci-dessus et le rayonnement est retourné vers un récepteur (45), par le biais du guide d'ondes (46), similaire à celui déjà décrit plus haut. Ici encore de façon préférée, les miroirs (44) et le guide d'ondes de retour (46) sont formés de façon intégrale. De façon très préférée, les miroirs (34, 44) et guides d'ondes (36, 46) sont combinés en des miroirs et guide d'ondes uniques, de même que les récepteurs (35) et (45). On obtient ainsi une compacité améliorée du système. Les zones de mesure (33) et (43) ont des dimensions distinctes, pouvant varier, par exemple, de 1 à 5 mm, et de préférence de 1 à 3 mm, respectivement.

Ainsi, chaque sonde (3, 4) effectue des mesures dans des conditions de trajet optique qui sont différentes. Il est possible de placer les émetteurs (31, (41) et récepteurs (35-45) hors du contact avec le fluide à tester, ce qui évite d'éventuelles contaminations. Le fait d'avoir des guides d'onde avec un mode de fonctionnement optique en réflexion est particulièrement utile pour les produits peu chargés en asphaltènes. En effet, dans les techniques classiques, les sondes et émetteurs sont en vis-à-vis (ce qui implique une immersion pratiquement complète d'au moins le récepteur dans le produit à analyser) et ont une surface utile relativement faible (diamètre des émetteurs/récepteurs de l'ordre de 0,7 mm), ce qui fait que pour ces types de produits il y a un risque de dispersion des mesures dus à des phénomènes de saturation du récepteur. L'utilisation d'un guide d'ondes de surface et section plus importantes (notamment plus de 10 fois la section par rapport à une sonde classique) permet de pallier cet inconvénient en favorisant l'absorption de la lumière tout au long du trajet optique.

Le fonctionnement du dispositif est décrit ci-après.

On plonge les sondes (2, 3, 4) du dispositif dans le milieu à analyser et l'appareil détermine automatiquement la sonde à utiliser en fonction des résultats des mesures préliminaires de transmission optiques sur le produit à analyser, avant ajout du solvant paraffinique, c'est à dire avant la floculation. Ces mesures préliminaires sont pilotées automatiquement par un programme informatique prédéterminé à la construction du dit appareil. On effectue alors des additions incrémentales de solvant paraffinique et on note la chute de transmission correspondant à la floculation des asphaltènes. Cette détermination se fait par des techniques classiques, par exemple, par mesure du pic d'absorption.

Selon un mode de réalisation avantageux du procédé de l'invention, on utilise le caractère intégré du dispositif qui rassemble les trois sondes. Dans un premier temps, l'appareil sélectionne la sonde (4) et envoie alors un signal de plus en plus puissant, par exemple de 0 à 100 mA. Si aucun signal n'est détecté au niveau du récepteur, cela signifie que le produit est trop absorbant et on passe alors à la sonde (3) qui opère avec une zone de détection plus petite (1 mm contre 3 mm par exemple). On recommence alors l'opération. Si encore à ce stade il n'y a pas de signal détecté, le produit est toujours trop absorbant et on bascule alors sur la sonde (1) (zone de détection petite, 0,5 mm). On effectuera alors les mesures avec cette sonde. Si à un moment du procédé lors de la montée en puissance de l'émission on note un signal, on gardera la sonde qui est alors choisie pour la mesure sur l'échantillon en cours. Lorsqu'un signal est détecté, on fixe la valeur d'émission de l'émetteur à la valeur seuil du signal. De cette façon, il est possible de choisir la sonde "in situ", ce qui offre un gain de temps appréciable pour l'opérateur.

En outre, l'intégration de 3 sondes dans un même dispositif permet d'obtenir un domaine d'application spectral possible pour les mesures qui est très large. Le dispositif selon l'invention est approprié pour la détermination des valeurs de P, Pa et Po pour tous types de résidus et fuels et n'est pratiquement pas limité quant à la nature du milieu à tester. Comme les sondes sont intégrées dans un seul et même dispositif, il est possible de procéder à plusieurs mesures en un temps moindre, ce qui au moins permet d'effectuer 3 mesures et donc d'obtenir 3 points de la courbe et par-là une bonne répétabilité des mesures pour P, Pa et Po. Enfin, la méthode de détermination selon l'invention peut être mise en oeuvre à température ambiante et ne nécessite pas de chauffage au cours de la mesure.

En général, le couple solvant aromatique/solvant paraffinique utilisé dans l'invention est le couple toluène/n-heptane.

Les différents éléments constitutif du dispositif sont disponibles auprès de la société ROFA.


EXEMPLES

Les exemples suivants illustrent l'invention sans la limiter.

Exemple 1.

Des mesures comparatives ont été effectuées sur 8 échantillons de produits noirs différents pour lesquels les valeurs P, Pa ont été mesurées et Po calculées, d'une part avec une méthode utilisant les sondes proposées par la société Texaco Belgium SA ("Méthode de mesures A" dans le tableau 1 ci-dessous) et d'autre part avec le procédé conforme à la présente invention ("Méthode de mesures B").

Dans cet exemple, les produits noirs repérés PN1 à PN8 correspondent à :

- PN1 et PN2 / Résidus de désulfuration d'un résidu atmosphérique ;
- PN3 et PN4 / Fiouls ;
- PN5 et PN6 / Résidus sous vide viscoréduits ;
- PN7 / Charge d'une unité de viscoréduction (Résidu sous vide + 20% de résidu atmosphérique) ;
- PN8 / Résidu sous vide viscoréduit

Tableau 1 : Comparaison des résultats des mesures P et Pa, et du calcul de Po, avec les sondes Texaco (Méthode de mesures A) et le procédé conforme à l'invention (Méthode de mesures B)

| Produits | Méthode de mesures A | | | Méthode de mesure B | | |
|---|---|---|---|---|---|---|
| | P | Pa | Po | P | Pa | Po |
| PN1 | Indétectable | | | 2,49 | 0,62 | 0,95 |
| PN2 | 1,92 | 0,71 | 0,57 | 1,92 | 0,71 | 0,57 |
| PN3 | 1,52 | 0,31 | 1,05 | 1,55 | 0,29 | 1,09 |
| PN4 | 3,6 | 0,75 | 0,91 | 3,43 | 0,76 | 0,83 |
| PN5 | 1,75 | 0,56 | 0,77 | 1,92 | 0,56 | 0,84 |
| PN6 | 1,52 | 0,56 | 0,67 | 1,54 | 0,56 | 0,68 |
| PN7 | Indétectable | | | 4,22 | 0,82 | 0,77 |
| PN8 | 1,89 | 0,30 | 1,33 | 1,88 | 0,32 | 1,29 |

Sur ce tableau, on voit qu'avec le procédé conformes à l'invention, on peut accéder plus facilement à la mesure du seuil de floculation d'un produit clair (PN1) et également d'un produit stable (PN7) rendu clair par une importante dilution. Ces deux produits ne pouvaient pas être mesurés en termes de P, Pa et donc de Po initialement avec la méthode manuelle classique utilisant les sondes Texaco. Pour chacune des 8 mesures, le coefficient de corrélation $R^2$ de la courbe de précipitation (aromaticité en fonction de l'inverse de la dilution) construite avec 3 points (P1, P2 et P3) varie de 0,976 à 1,000.

De plus, l'automatisation de l'analyse, y compris le choix de la sonde la plus adaptée à la mesure, permet de réaliser l'analyse complète en moins d'une heure.

Exemple 2

Afin de comparer les valeurs des répétabilités obtenues sur les mesures de P, Pa puis du Po calculé, accessibles par la méthode manuelle utilisant les sondes Texaco (Méthodes de mesures A) et celle automatisée dont le procédé fait l'objet de la présente invention (Méthode de mesures B), 3 échantillons PN2, PN3 et PN8 ont été choisis parmi le corpus défini dans l'exemple 1 ci-dessus.

Les résultats pour 8 mesures distinctes, avec les 2 méthodes, sur chacun de ces 3 échantillons sont indiqués respectivement dans les tableaux 2, 3 et 4 ci-dessous. Les valeurs moyennes calculées, ainsi que les écarts-types et les répétabilités sont indiqués dans ces mêmes tableaux.

Tableau 2 : Mesures des répétabilités sur les valeurs P, Pa et Po sur l'échantillon PN2 obtenues avec les sondes Texaco (Méthode de mesures A) et le procédé conforme à l'invention (Méthode de mesures B)

| Nombre d'analyses | PN2 | | | | | |
|---|---|---|---|---|---|---|
| | Méthode de mesures A | | | Méthode de mesures B | | |
| | P | Pa | Po | P | Pa | Po |
| 1 | 1,96 | 0,71 | 0,57 | 1,92 | 0,71 | 0,56 |
| 2 | 1,99 | 0,70 | 0,60 | 1,92 | 0,71 | 0,57 |
| 3 | 1,88 | 0,73 | 0,51 | 1,89 | 0,71 | 0,54 |
| 4 | 1,80 | 0,68 | 0,58 | 1,92 | 0,71 | 0,55 |
| 5 | 2,00 | 0,67 | 0,66 | 1,96 | 0,71 | 0,57 |
| 6 | 1,85 | 0,72 | 0,52 | 1,88 | 0,71 | 0,54 |
| 7 | 1,98 | 0,76 | 0,47 | 1,90 | 0,71 | 0,55 |
| 8 | 1,90 | 0,70 | 0,57 | 1,91 | 0,71 | 0,56 |
| **Moyenne** | **1,92** | **0,71** | **0,56** | **1,91** | **0,71** | **0,56** |
| **Ecart-type** | **0,07** | **0,03** | **0,06** | **0,02** | **0,00** | **0,01** |
| **Répétabilité** | **0,20** | **0,08** | **0,17** | **0,06** | **0,00** | **0,03** |

Tableau 3 : Mesures des répétabilités sur les valeurs P, Pa et Po sur l'échantillon PN3 obtenues avec les sondes Texaco (Méthode de mesures A) et le procédé conforme à l'invention (Méthode de mesures B)

| Nombre d'analyses | PN3 | | | | | |
|---|---|---|---|---|---|---|
| | Méthode de mesures A | | | Méthode de mesures B | | |
| | P | Pa | Po | P | Pa | Po |
| 1 | 1,42 | 0,36 | 0,91 | 1,54 | 0,32 | 1,05 |
| 2 | 1,44 | 0,33 | 0,96 | 1,58 | 0,30 | 1,10 |
| 3 | 1,52 | 0,29 | 1,07 | 1,56 | 0,30 | 1,09 |
| 4 | 1,40 | 0,37 | 0,88 | 1,53 | 0,32 | 1,04 |
| 5 | 1,55 | 0,30 | 1,08 | 1,54 | 0,31 | 1,07 |
| 6 | 1,48 | 0,35 | 0,96 | 1,52 | 0,31 | 1,05 |
| 7 | 1,50 | 0,36 | 0,96 | 1,51 | 0,32 | 1,03 |
| 8 | 1,53 | 0,30 | 1,07 | 1,54 | 0,32 | 1,05 |
| **Moyenne** | **1,48** | **0,33** | **0,99** | **1,54** | **0,31** | **1,06** |
| **Ecart-type** | **0,05** | **0,03** | **0,08** | **0,02** | **0,01** | **0,02** |
| **Répétabilité** | **0,14** | **0,08** | **0,22** | **0,06** | **0,03** | **0,06** |

Tableau 4 : Mesures des répétabilités sur les valeurs P, Pa et Po sur l'échantillon PN8 obtenues avec les sondes Texaco (Méthode de mesures A) et le procédé conforme à l'invention (Méthode de mesures B)

| Nombre d'analyses | PN8 | | | | | |
|---|---|---|---|---|---|---|
| | Méthode de mesures A | | | Méthode de mesures B | | |
| | P | Pa | Po | P | Pa | Po |
| 1 | 1,89 | 0,30 | 1,32 | 1,84 | 0,30 | 1,29 |
| 2 | 1,80 | 0,33 | 1,20 | 1,88 | 0,32 | 1,29 |
| 3 | 1,92 | 0,31 | 1,32 | 1,85 | 0,30 | 1,30 |
| 4 | 1,78 | 0,34 | 1,17 | 1,83 | 0,32 | 1,25 |
| 5 | 1,85 | 0,28 | 1,33 | 1,86 | 0,32 | 1,26 |
| 6 | 1,82 | 0,28 | 1,24 | 1,83 | 0,33 | 1,23 |
| 7 | 1,92 | 0,34 | 1,27 | 1,84 | 0,33 | 1,23 |
| 8 | 1,90 | 0,29 | 1,35 | 1,88 | 0,32 | 1,28 |
| Moyenne | 1,86 | 0,31 | 1,28 | 1,85 | 0,32 | 1,27 |
| Ecart-type | 0,06 | 0,02 | 0,07 | 0,02 | 0,01 | 0,03 |
| Répétabilité | 0,17 | 0,06 | 0,20 | 0,06 | 0,03 | 0,08 |

On voit sur les tableaux 2, 3 et 4 que les valeurs moyennes obtenues avec les 2 méthodes de mesures sont sensiblement identiques et surtout que les valeurs des écarts-types et des répétabilités sont plus faibles d'un facteur environ 3 quand la méthode de mesure utilise le dispositif de détection du seuil de floculation et le procédé associé conforme à la présente invention (avec ici une automatisation complète de la méthode de mesure).

**Revendications**

**1.** Procédé de mesure du seuil de floculation d'un milieu colloïdal par addition étagée de solvant apolaire comprenant les étapes suivantes:

(i) on introduit dans le milieu au moins deux sondes à émetteur et récepteur de lumière lesquelles sondes opèrent par transmission optique au niveau de zones de détection de dimensions distinctes;
(ii) on détermine celle des deux sondes qui est appropriée à la mesure par détermination du seuil de transmission du milieu avant addition de solvant apolaire; et
(iii) on détermine à l'aide de la sonde ainsi désignée la floculation après addition de la quantité de solvant apolaire nécessaire à la floculation,

lesdites au moins deux sondes étant comprises dans un dispositif de mesure de la lumière dans un liquide par insertion dans ledit milieu d'au moins deux sondes (3, 4), chaque sonde (3, 4) comprenant :

- un émetteur (31, 41) relié à un premier guide d'ondes (32, 42) émettant au niveau d'une zone de détection (33, 43) un faisceau lumineux, directement sur la dite zone;
- un second guide d'ondes (36, 46) recevant perpendiculairement à sa fenêtre d'entrée (34a) ledit faisceau lumineux renvoyé vers un récepteur (35, 45) pour analyse ; et
- inclus dans ce second guide d'ondes, au moins un miroir de renvoi (34, 44) du faisceau lumineux par rotation ou par réflexion, située en aval de ladite zone de détection.

**2.** Procédé selon la revendication 1 dans lequel les sondes sont des sondes émettant dans le domaine du NIR et on détermine l'occurrence de la floculation par détermination du pic d'absorption.

**3.** Procédé selon la revendication 1 ou 2, dans lequel la sonde de mesure est choisie automatiquement parmi les au moins deux sondes.

**4.** Procédé selon l'une des revendications 1 à 3, mis en oeuvre à température ambiante.

**5.** Procédé selon l'une des revendications 1 à 4, dans lequel le milieu comprend des asphaltènes.

**6.** Procédé selon l'une quelconque des revendications précédentes, dans lequel la lumière est constituée de longueurs d'ondes appartenant au domaine spectral du proche infra-rouge.

**7.** Procédé selon l'une quelconque des revendications précédentes, dans lequel la lumière est constituée de longueurs d'ondes appartenant au domaine spectral de l'infra-rouge.

**8.** Procédé selon l'une quelconque des revendications précédentes, dans lequel le dispositif comprend au moins une sonde (3, 4), fonctionnant en transmission indirecte par réflexion.

**9.** Procédé selon la revendication 8, dans lequel le dispositif comprend en outre une sonde (2), fonctionnant en transmission directe.

**10.** Procédé selon la revendication 8 ou 9, dans lequel au moins une sonde (3, 4) comprend un émetteur (31, 41) relié à un premier guide d'ondes (32, 42) émettant au niveau d'une zone de détection (33, 43) du milieu, des miroirs de renvoi (34, 4-4) en aval de ladite zone de détection au niveau de fenêtre d'entrée (34a, 44a) et un second guide d'ondes (36, 46) relié à un récepteur (35, 45).

**11.** Procédé selon l'une quelconque des revendications précédentes, dans lequel les miroirs de renvoi (34, 44) opèrent à 180°.

**12.** Procédé selon l'une quelconque des revendications précédentes, dans lequel les miroirs de renvoi (34, 44) et le second guide d'ondes (36, 46) sont intégrés en une seule pièce.

**13.** Procédé selon l'une quelconque des revendications précédentes, dans lequel les seconds guides d'ondes (36, 46) sont confondus.

**14.** Procédé selon l'une quelconque des revendications précédentes, dans lequel les premier et second guides d'ondes (32, 42; 36, 46) sont en verre.

**15.** Procédé selon l'une quelconque des revendications précédentes, dans lequel le dispositif comprend deux sondes (3, 4), fonctionnant en transmission indirecte par réflexion, ces sondes opérant au niveau de zones de détection (33, 43) du milieu de dimensions distinctes.

**16.** Procédé selon l'une quelconque des revendications précédentes, dans lequel le dispositif comprend une sonde (3, 4), fonctionnant en transmission indirecte par réflexion, cette sonde opérant au niveau d'une zone de détection (33) du milieu dont la dimension est variable.

**17.** Procédé selon l'une quelconque des revendications précédentes, dans lequel le dispositif comprend d'un côté une première sonde (2) en transmission directe opérant au niveau d'une première zone de détection (23) du milieu; et de l'autre côté deux sondes (3, 4) opérant au niveau de zones de détection (33, 43) du milieu de dimensions distinctes, ces trois zones ayant des dimensions croissantes, la première zone de détection de la sonde opérant en transmission directe étant de dimension la plus faible.

**18.** Procédé de détermination de la stabilité d'un mélange comprenant des asphaltènes par mise en oeuvre successive au moins deux fois du procédé selon l'une des revendications 1 à 17 sur un milieu contenant le mélange et une quantité donnée de solvant aromatique, à des taux de dilution différents.

**19.** Procédé selon la revendication 18, dans lequel le couple solvant aromatique/solvant paraffinique utilisé est le couple toluène/n-heptane.

**Claims**

**1.** Method for measuring the flocculation threshold of a colloidal medium by addition in stages of apolar solvent comprising the following stages:

(i) at least two probes are introduced into the medium, which probes operate by optical transmission at the level of detection zones with different dimensions ;
(ii) which of the two probes is suited for the measurement is determined by determination of the transmission threshold of the medium before addition of apolar solvent; and
(iii) flocculation is determined using the thus-designated probe after addition of the quantity of apolar solvent necessary for flocculation,

said at least two probes being included in a device for measuring light in a liquid by inserting into said medium at least two probes (3, 4), each probe (3, 4) comprising:

- an emitter (31, 41) connected to a first waveguide (32, 42) emitting at the level of a detection zone (33, 43) a light beam directly onto said zone,
- a second waveguide (36, 46) receiving perpendicular to its aperture (34a) said light beam sent back to a receiver (35, 45) for analysis; and
- included in this second waveguide, at least one reflecting mirror (34, 44) reflecting the light beam by rotation or by reflection, situated downstream of said detection zone.

2. Method according to claim 1, in which the probes are probes emitting in the NIR range and the occurrence of flocculation is determined by determination of the absorption peak.

3. Method according to claim 1 or 2, in which the measuring probe is chosen automatically from at least two probes.

4. Method according to one of claims 1 to 3, implemented at ambient temperature.

5. Method according to one of claims 1 to 4, in which the medium comprises asphaltenes.

6. Method according to any one of the preceding claims, in which the light is constituted by wavelengths belonging to the spectral range of the near infrared.

7. Method according to any one of the preceding claims, in which the light is constituted by wavelengths belonging to the spectral range of the infrared.

8. Method according to any one of the preceding claims, in which the device includes at least one probe (3, 4), operating in indirect transmission by reflection.

9. Method according to claim 8, in which the device also includes a probe (2), operating in direct transmission.

10. Method according to claim 8 or 9, in which at least one probe (3, 4) comprises an emitter (31, 41) connected to a first wave guide (32, 42) emitting at the level of a detection zone (33, 43) of the medium, reflecting mirrors (34, 44) downstream of said detection zone at the level of the aperture (34a, 44a) and a second waveguide (36, 46) connected to a receiver (35, 45).

11. Method according to any one of the preceding claims, in which the reflecting mirrors (34, 44) operate at 180°.

12. Method according to any one of the preceding claims, in which the reflecting mirrors (34, 44) and the second waveguide (36, 46) are integrated in a single piece.

13. Method according to any one of the preceding claims, in which the second waveguides (36, 46) are merged.

14. Method according to any one of the preceding claims, in which the first and second waveguides (32, 42; 36, 46) are made of glass.

15. Method according to any one of the preceding claims, in which the device comprises two probes (3, 4), operating in indirect transmission by reflection, these probes operating at the level of detection zones (33, 43) of the medium with different dimensions.

16. Method according to any one of the preceding claims, in which the device comprises a probe (3, 4), operating in indirect transmission by reflection, this probe operating at the level of a detection zone (33) of the medium the dimension of which is variable.

17. Method according to any one of the preceding claims, in which the device comprises firstly, a first probe (2) in direct transmission, operating at the level of a first detection zone (23) of the medium; and secondly, two probes (3, 4) operating at the level of detection zones (33, 43) of the medium with distinct dimensions, these three zones having increasing dimensions, the first detection zone of the probe operating in direct transmission having the smallest dimension.

18. Method for determining the stability of a mixture comprising asphaltenes by successively implementing at least twice the method according to one of claims 1 to 17 on a medium containing the mixture and a given quantity of aromatic solvent, at different dilution rates.

19. Method according to claim 18, in which the aromatic solvent/paraffinic solvent pair used is the toluene/n-heptane pair.

**Patentansprüche**

1. Verfahren zur Messung der Flockungsschwelle eines kolloidalen Mediums durch stufenweise Beigabe eines apolaren Lösungsmittels, umfassend die folgenden Schritte:

   (i) Einführung mindestens zweier Sonden mit Lichtsender und -empfänger in das Medium, wobei die Sonden durch optische Übertragung im Bereich Erfassungszonen von unterschiedlichen Dimensionen wirken;
   (ii) Bestimmung jener der beiden Sonden, die für die Messung durch Bestimmung der Übertragungsschwelle des Mediums vor Beigabe eines apolaren Lösungsmittels geeignet ist; und
   (iii)Bestimmung der Flockung mit Hilfe der so bestimmten Sonde nach Beigabe der für die Flockung erforderlichen Menge an apolarem Lösungsmittel,

   wobei die mindestens zwei Sonden in einer Vorrichtung zur Messung des Lichts in einer Flüssigkeit durch Einsetzen mindestens zweier Sonden (3, 4) in das Medium enthalten sind, wobei jede Sonde (3, 4) umfasst:

   - einen Sender (31, 41), der mit einem ersten Wellenleiter (32, 42) verbunden ist, der im Bereich einer Erfassungszone (33, 43) einen Lichtstrahl direkt auf die Zone entsendet;
   - einen zweiten Wellenleiter (36, 46), der senkrecht auf sein Eintrittsfenster (34a) den zu einem Empfänger (35, 45) zur Analyse zurück gesandten Lichtstrahl empfängt; und
   - eingeschlossen in diesen zweiten Wellenleiter mindestens einen Spiegel (34, 44) zum Umlenken des Lichtstrahls durch Rotation oder Reflexion, angeordnet stromabwärts zu der Erfassungszone.

2. Verfahren nach Anspruch 1, bei dem die Sonden derartige Sonden sind, die im Bereich des NIR entsenden, wobei das Auftreten der Flockung durch Bestimmung des Absorptionspeaks bestimmt wird.

3. Verfahren nach Anspruch 1 oder 2, bei dem die Messsonde automatisch unter den mindestens zwei Sonden ausgewählt wird.

4. Verfahren nach einem der Ansprüche 1 bis 3, das bei Raumtemperatur eingesetzt wird.

5. Verfahren nach einem der Ansprüche 1 bis 4, bei dem das Medium Asphaltene umfasst.

6. Verfahren nach einem der vorhergehenden Ansprüche, bei dem das Licht von Wellenlängen gebildet ist, die dem Spektralbereich des nahen Infrarots angehören.

7. Verfahren nach einem der vorhergehenden Ansprüche, bei dem das Licht von Wellenlängen gebildet ist, die dem Spektralbereich des Infrarots angehören.

8. Verfahren nach einem der vorhergehenden Ansprüche, bei dem die Vorrichtung mindestens eine Sonde (3, 4) umfasst, die mit indirekter Übertragung durch Reflexion funktioniert.

**9.** Verfahren nach Anspruch 8, bei dem die Vorrichtung ferner eine Sonde (2) umfasst, die mit direkter Übertragung funktioniert.

**10.** Verfahren nach Anspruch 8 oder 9, bei dem mindestens eine Sonde (3, 4) einen Sender (31, 41), der mit einem ersten Wellenleiter (32, 42) verbunden ist, der im Bereich einer Erfassungszone (33, 43) des Mediums entsendet, Umlenkspiegel (34, 44) stromabwärts zur Erfassungszone im Bereich des Eintrittsfensters (34a, 44a) und einen zweiten Wellenleiter (36, 46) umfasst, der mit einem Empfänger (35, 45) verbunden ist.

**11.** Verfahren nach einem der vorhergehenden Ansprüche, bei dem die Umlenkspiegel (34, 44) über 180° wirken.

**12.** Verfahren nach einem der vorhergehenden Ansprüche, bei dem die Umlenkspiegel (34, 44) und der zweite Wellenleiter (36, 46) in einem einzigen Stück integriert sind.

**13.** Verfahren nach einem der vorhergehenden Ansprüche, bei dem die zweiten Wellenleiter (36, 46) zusammenfallen.

**14.** Verfahren nach einem der vorhergehenden Ansprüche, bei dem die ersten und zweiten Wellenleiter (32, 42; 36, 46) aus Glas sind.

**15.** Verfahren nach einem der vorhergehenden Ansprüche, bei dem die Vorrichtung zwei Sonden (3, 4) umfasst, die mit indirekter Übertragung durch Reflexion funktionieren,
wobei diese Sonden im Bereich von Erfassungszonen (33, 43) des Mediums von unterschiedlichen Dimensionen wirken.

**16.** Verfahren nach einem der vorhergehenden Ansprüche, bei dem die Vorrichtung eine Sonde (3, 4) umfasst, die mit indirekter Übertragung durch Reflexion funktioniert, wobei diese Sonde im Bereich einer Erfassungszone (33) des Mediums mit variabler Dimension wirkt.

**17.** Verfahren nach einem der vorhergehenden Ansprüche, bei dem die Vorrichtung einerseits eine erste Sonde (2) mit direkter Übertragung, die im Bereich einer ersten Erfassungszone (23) des Mediums wirkt, und andererseits zwei Sonden (3, 4), die im Bereich von Erfassungszonen (33, 43) des Mediums von unterschiedlichen Dimensionen wirken, umfasst, wobei diese drei Zonen wachsende Dimensionen haben, wobei die erste Erfassungszone der Sonde, die mit direkter Übertragung wirkt, die kleinste Dimension hat.

**18.** Verfahren zur Bestimmung der Stabilität eines Gemisches, umfassend Asphaltene, durch aufeinander folgenden Einsatz von mindestens zweimal dem Verfahren nach einem der Ansprüche 1 bis 17 an einem Medium, das das Gemisch und eine gegebene Menge an aromatischem Lösungsmittel mit unterschiedlichen Verdünnungsgraden enthält.

**19.** Verfahren nach Anspruch 18, bei dem die verwendete Paarung aromatisches Lösungsmittel / Paraffinlösungsmittel die Paarung Toluol / n-Heptan ist.

## COURBE DE PRECIPITATION D'UN PRODUIT NOIR

**Fig. 1**

**Fig. 2**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2596522 A
- US 4628204 A
- EP 0582320 A
- DE 10149879 A